# EUROPÄISCHE PATENTSCHRIFT

(11) **EP 4 392 227 B1**
(45) Veröffentlichungstag und Bekanntmachung des Hinweises auf die Patenterteilung: **27.08.2025**
(21) Anmeldenummer: 22765807.7
(22) Anmeldetag: 16.08.2022
(51) Int. Cl.: B29C 49/78, B29C 49/06, B29C 49/12, B29C 49/64

(54) **VORRICHTUNG UND VERFAHREN ZUM HERSTELLEN VON KUNSTSTOFFBEHÄLTNISSEN MIT INSPEKTION**
APPARATUS AND METHOD FOR PRODUCING CONTAINERS, WITH INSPECTION
APPAREIL ET MÉTHODE DE PRODUCTION DE RÉCIPIENTS AVEC INSPECTION

(30) Priorität: 05.11.2021 DE 102021128918
(43) Veröffentlichungstag der Anmeldung: 03.07.2024
(73) Patentinhaber: Krones AG, 93073 Neutraubling (DE)
(72) Erfinder: FISCHER, Simon, 93073 Neutraubling (DE); STOPFER, Andreas, 93073 Neutraubling (DE); SCHOBER, Stefan, 93073 Neutraubling (DE)
(74) Vertreter: Hannke Bittner & Partner mbB Regensburg
(86) Internationale Anmeldenummer: PCT/EP2022/072881
(87) Internationale Veröffentlichungsnummer: WO 2023/078593

(56) Entgegenhaltungen:
- DE-A1- 102007 046 387
- US-A- 5 049 750
- US-A1- 2006 214 321
- US-A1- 2014 077 404

## Beschreibung

Die vorliegende Erfindung bezieht sich auf eine Vorrichtung und ein Verfahren zum Herstellen von Kunststoffbehältnissen. Derartige Vorrichtungen und Verfahren sind aus dem Stand der Technik seit langem bekannt. Auch ist es dabei bekannt, dass zunächst Kunststoffvorformlinge erwärmt werden, und anschließend diese Kunststoffvorformlinge zu Kunststoffbehältnissen expandiert werden. Dies kann beispielsweise in Blasformmaschinen wie Streckblasmaschinen erfolgen.

Es ist weiterhin bekannt, dass bei derartigen Herstellungsverfahren diverse Inspektionen vorgenommen werden. Bei der Produktion von Kunststoffbehältnissen wie PET-Behältnissen ist die Wanddicke der erzeugten Behältnisse ein wichtiges Qualitätskriterium. Die Wanddicke und ihre Dickenverteilung kennzeichnen die mechanischen Eigenschaften der Behältnisse. In einzelnen Abschnitten der Behältnisse wird oft auch das Gewicht dieser Bereiche als Qualitätsparameter erfasst. Das Gewicht solcher Bereiche ist ebenfalls mit der Wanddicke innerhalb derselben verknüpft. Die Stabilität der Wanddicken und/oder die Abschnittsgewichte über der Zeit und über verschiedene Produktionszustände kennzeichnet die Stabilität der Produktionsanlage. Diese Stabilität kann weiterhin ein wichtiger Qualitätsparameter sein.

Die US 6,863,860 beschreibt ein Verfahren und eine Vorrichtung zum Überprüfen der Wanddicke von blasgeformten Kunststoffbehältnissen. Weitere Gattungsgemäße Vorrichtungen und Verfahren sind in den Patentschriften DE102007046387A1, US2006/214321A1, US5049750A und US2014/077404A1 beschrieben.

Bei der Produktion von PET Behältnissen beeinflusst weiterhin der Wassergehalt, der dazu verwendeten Kunststoffvorformlinge die Verarbeitung. Der Wassergehalt ist einerseits ein allgemeiner Qualitätsparameter, der mit der Lagerungsdauer und Behandlung der Kunststoffvorformlinge zusammenhängt. Weiterhin kann er jedoch auch die notwendigen Verarbeitungsparameter im Streckblasprozess sowie die späteren Behältniseigenschaften beeinflussen. Er kann auch weiterhin das Verhalten der Kunststoffvorformlinge im Erwärmungsprozess, insbesondere mit Infrarot oder Mikrowellenstrahlung beeinflussen.

Weiterhin beeinflusst die Produktion der PET-Behältnisse die Infrarotabsorption der Kunststoffvorformlinge, insbesondere die breitbandige Infrarotabsorption der Kunststoffvorformlinge, welche das Erwärmen der Kunststoffvorformlinge und die dazu verwendeten Maschineneinstellungen beeinflusst. An sich unerwünschte Chargenschwankungen, die insbesondere bei Verwendung von recyceltem Material in den Kunststoffvorformlingen auftreten, können, wechselnde Infrarotabsorption bedingen.

Die Überprüfung der Wanddicke der erzeugten Behältnisse kann im Stand der Technik beispielsweise mittels einer Zeile von Messstellen erfolgen. Jede Messstelle erfasst mittels Infrarotsensoren die Absorption der Behältnisse und bevorzugt auch eines Referenzermitters an mehreren und bevorzugt zwei Wellenlängen punktuell oder in engen Bereichen.

Aus den Messsignalen kann auf eine Wanddicke geschlossen werden. Eine solche Messeinrichtung kann dabei unmittelbar nach der Behälterherstellungseinrichtung oder nachfolgend dazu platziert werden.

Die Überprüfung des Wassergehalts und der Infrarotabsorption der Kunststoffvorformlinge kann in einem messtechnisch sehr ähnlichen Aufbau erfolgen, wie die Wandstärkenmessung. Dabei ist es jedoch möglich, dass die betrachteten Wellenlängen, die Referenzermitter und die optischen Bauteile in ihren Eigenschaften abweichen.

Im Stand der Technik sind daher bei diesen Anlagen zwei Inspektionseinrichtungen vorgesehen, welche zum Inspizieren einerseits der Kunststoffvorformlinge und andererseits der Kunststoffbehältnisse, beispielsweise Kunststoffflaschen dienen. Dies ist vergleichsweise aufwendig, insbesondere wenn berücksichtigt wird, dass die Messprinzipien in beiden Fällen zumindest ähnlich sind.

Der vorliegenden Erfindung liegt daher die Aufgabe zugrunde, für derartige Vorrichtungen zum Herstellen von Kunststoffbehältnissen die Inspektionen zu vereinfachen. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Herstellen von Kunststoffbehältnissen und insbesondere Kunststoffflaschen weist eine Transporteinrichtung auf, welche Kunststoffvorformlinge entlang eines vorgegebenen Transportpfads transportiert. Weiterhin weist die Vorrichtung eine Umformungseinrichtung auf, welche die Kunststoffvorformlinge zu Kunststoffbehältnissen expandiert und eine erste Inspektionseinrichtung und/oder Kontrolleinrichtung, welche dazu geeignet und bestimmt ist, die Kunststoffvorformlinge zu inspizieren. Weiterhin weist die Vorrichtung eine zweite Inspektionseinrichtung und/oder Kontrolleinrichtung auf, welche dazu geeignet und bestimmt ist, die Kunststoffbehältnisse zu inspizieren und/oder zu kontrollieren.

Erfindungsgemäß weist die erste Inspektionseinrichtung einen ersten Inspektionsbereich auf, der von den zu inspizierenden Kunststoffvorformlingen zu der Inspektion durchlaufen wird und die zweite Inspektionseinrichtung weist einen zweiten Inspektionsbereich auf, der von den zu inspizierenden Kunststoffbehältnissen zu der Inspektion durchlaufen wird, wobei dieser erste Inspektionsbereich dieser zweite Inspektionsbereich wenigstens teilweise überlappen und/oder übereinstimmen.

Es wird darauf hingewiesen, dass im Folgenden einheitlich der Begriff Inspektionseinrichtung verwendet wird, aber im Rahmen der vorliegenden Anmeldung unter einer Inspektionseinrichtung auch eine Einrichtung verstanden wird, welche Kunststoffvorformlinge hinsichtlich wenigstens eines für diese charakteristischen Merkmals inspiziert und/oder kontrolliert und/oder überprüft.

Bei einer weiteren bevorzugten Ausführungsform gibt die erste Inspektionseinrichtung wenigstens einen Messwert und/oder wenigstens ein Inspektionsergebnis auf, welches für wenigstens eine physikalische Eigenschaft eines zu inspizierenden Kunststoffvorformlings charakteristisch ist. Hierbei kann es sich beispielsweise um eine Wandungsstärke eines Wandungsbereichs eines Grundkörpers des Kunststoffvorformlings handeln oder um eine Transparenz oder dergleichen.

Bei einer weiteren bevorzugten Ausführungsform gibt die zweite Inspektionseinrichtung wenigstens einen Messwert und/oder wenigstens ein Inspektionsergebnis auf, welches für wenigstens eine physikalische Eigenschaft eines zu inspizierenden Kunststoffbehältnisses charakteristisch ist. Hierbei kann es sich beispielsweise um eine Wandungsstärke eines Wandungsbereichs eines Grundkörpers des Kunststoffbehältnisses handeln oder um eine Transparenz oder dergleichen.

Bei einer weiteren bevorzugten Ausführungsform ist die zweite Inspektionseinrichtung bezogen auf den Transportpfad der Kunststoffvorformlinge bzw. Kunststoffbehältnisse nach der ersten Inspektionseinrichtung angeordnet. Bei einer weiteren bevorzugten Ausführungsform sind die erste und die zweite Inspektionseinrichtung derart ausgebildet, dass zunächst die erste Inspektionseinrichtung von einem bestimmten Kunststoffvorformling durchlaufen wird und anschließend die zweite Inspektionseinrichtung von dem Kunststoffbehältnis, zu welchem dieser Kunststoffvorformling geformt wurde.

Bevorzugt werden sowohl die Kunststoffvorformlinge als die Kunststoffbehältnisse durch den gleichen Inspektionsbereich geführt, in dem die Inspektion stattfindet. Bevorzugt führt sowohl der Transportpfad der Kunststoffvorformlinge, bevor diese umgeformt werden durch diesen Inspektionsbereich als auch der Transportpfad der umgeformten Kunststoffbehältnisse.

Besonders bevorzugt sind die erste Inspektionseinrichtung und die zweite Inspektionseinrichtung im Wesentlichen an dem gleichen Ort der Vorrichtung angeordnet. Auf diese Weise ist bevorzugt nur eine Messeinrichtung nötig, die sowohl zum Inspizieren der Kunststoffvorformlinge als auch zum Inspizieren der Kunststoffbehältnisse dient.

Besonders bevorzugt handelt es sich bei der Umformungseinrichtung um eine Blasformmaschine, welche die Kunststoffvorformlinge zu den Kunststoffbehältnissen expandiert und insbesondere bläst. Insbesondere handelt es sich bei der Umformungseinrichtung um eine Streckblasmaschine. Bevorzugt weist die Umformungseinrichtung einen bewegbaren und insbesondere drehbaren Träger auf, an dem eine Vielzahl von Umformungsstationen zum Umformen der Kunststoffvorformlinge zu den Kunststoffbehältnissen angeordnet ist.

Bevorzugt weisen diese Umformungsstationen jeweils Blasformen auf, die geöffnet und geschlossen werden können, wobei im Inneren dieser Blasformen die Kunststoffvorformlinge zu den Kunststoffbehältnissen expandiert werden. Bevorzugt weisen diese Umformungsstationen auch stangenartige Körper, wie insbesondere aber nicht ausschließlich Reckstangen auf, die in das Innere der Kunststoffvorformlinge eingeführt werden können, um diese in deren Längsrichtung zu dehnen.

Bevorzugt weist die Transporteinrichtung eine Vielzahl von Halte- und/oder Greifeinrichtungen auf, welche die Kunststoffvorformlinge an ihren Mündungsbereichen greifen, um diese zu transportieren. Besonders bevorzugt werden die Kunststoffbehältnisse und die Kunststoffvorformlinge höhengleich transportiert, d. h. die Mündungen der Kunststoffvorformlinge bzw. Kunststoffbehältnisse werden durch die gesamte Vorrichtung hindurch im Wesentlichen höhengleich transportiert.

Bei einer weiteren bevorzugten Ausführungsform ist zusätzlich zu den Inspektionseinrichtungen und/oder Messeinrichtungen eine Prozessoreinrichtung, beispielsweise eine Erfassungs- und Verarbeitungseinrichtung beispielsweise ein PET-View vorgesehen, welche die Inspektions- bzw. Messeinrichtungen anspricht und steuert, sowie bevorzugt ihre Messsignale auswertet und/oder protokolliert, Statistiken erstellt und/oder einem Benutzer oder die Bediener oder gegebenenfalls nachfolgenden Systemen bereitstellt.

Bevorzugt ist dabei eine Prozessoreinrichtung und oder eine Verarbeitungseinrichtung vorgesehen, welche beiden Inspektionseinrichtungen zugeordnet ist. Da bevorzugt die Inspektionen bzw. Messungen an den jeweiligen Kunststoffvorformlingen und Behältnissen zeitlich bzw. örtlich versetzt ablaufen, kann eine einzige Verarbeitungseinrichtung die Auswertung der Messwerte beider Inspektionseinrichtungen durchführen.

Bevorzugt weist die Vorrichtung eine Zuordnungseinrichtung auf, welche einem Inspektionsergebnis eines bestimmten Kunststoffvorformling ein Inspektionsergebnis des Kunststoffbehältnisses, welches aus diesem Kunststoffvorformling geformt wurde, zuordnet. Auf diese Weise lassen sich die Inspektionsergebnisse die mit der ersten Inspektionseinrichtung gewonnen wurden, denjenigen Inspektionsergebnissen, welche mit der zweiten Inspektionseinrichtung an dem gleichen (nur umgeformten) Objekt vorgenommen wurden zuordnen.

Es wird darauf hingewiesen, dass die hier und nachfolgende beschriebene Zuordnung der Inspektionsergebnisse auch unabhängig von der Ausführung mit den gleichen Inspektionsbereichen vorteilhaft sein kann und sich die Anmelderin daher vorbehält, auf eine derartige Ausführungsform separat Schutz zu beanspruchen.

Eine weitere erfindungsgemäße Vorrichtung zum Herstellen von Kunststoffbehältnissen und insbesondere Kunststoffflaschen weist eine Transporteinrichtung auf, welche Kunststoffvorformlinge entlang eines vorgegebenen Transportpfads transportiert. Weiterhin weist die Vorrichtung eine Umformungseinrichtung auf, welche die Kunststoffvorformlinge zu Kunststoffbehältnissen expandiert und eine erste Inspektionseinrichtung und/oder Kontrolleinrichtung, welche dazu geeignet und bestimmt ist, die Kunststoffvorformlinge zu inspizieren. Weiterhin weist die Vorrichtung eine zweite Inspektionseinrichtung und/oder Kontrolleinrichtung auf, welche dazu geeignet und bestimmt ist, die Kunststoffbehältnisse zu inspizieren und/oder zu kontrollieren.

Erfindungsgemäß weist die erste Inspektionseinrichtung einen ersten Inspektionsbereich auf, der von den zu inspizierenden Kunststoffvorformlingen zu der Inspektion durchlaufen wird und die zweite Inspektionseinrichtung weist einen zweiten Inspektionsbereich auf, der von den zu inspizierenden Kunststoffbehältnissen zu der Inspektion durchlaufen wird, und die Vorrichtung weist eine Zuordnungseinrichtung auf, welche einem Inspektionsergebnis eines bestimmten Kunststoffvorformling ein Inspektionsergebnis des Kunststoffbehältnisses, welches aus diesem Kunststoffvorformling geformt wurde, zuordnet.

Bei einer weiteren vorteilhaften Ausführungsform weist die Vorrichtung wenigstens eine Auswerteeinrichtung auf, welche wenigstens ein Inspektionsergebnis der ersten Inspektionseinrichtung und/oder wenigstens ein Inspektionsergebnis der zweiten Inspektionseinrichtung auswertet und welche insbesondere wenigstens ein Inspektionsergebnis der ersten Inspektionseinrichtung mit wenigstens einem Inspektionsergebnis der zweiten Inspektionseinrichtung vergleicht.

Bei dieser Ausgestaltung wird vorgeschlagen, dass Messergebnisse, welche von der ersten Inspektionseinrichtung an einem bestimmten Kunststoffvorformling gewonnen wurden und Messergebnisse, welche an demjenigen Kunststoffbehältnis, in welches dieser Kunststoffvorformling umgeformt wurden, einander zugeordnet bzw. korreliert werden.

Bevorzugt werden diese einander zugeordneten Messergebnisse bzw. Inspektionsergebnisse weiter ausgewertet. Dabei kann diese Auswertung in den Inspektionseinrichtungen bzw. in diesen zugeordneten Auswerteeinrichtungen erfolgen. Es wäre aber auch möglich, dass die Inspektionsergebnisse oder entsprechende Messdaten an eine weitere Auswerteeinheit übermittelt werden und dort ausgewertet werden.

Bevorzugt ermittelt die Auswerteeinrichtung wenigstens einen Zusammenhang zwischen den einander zugeordneten Inspektionsergebnissen, etwa ein Verhältnis zwischen einer Wandungsstärke des Kunststoffvorformlings in einem bestimmten Bereich und einer Wandungsstärke des aus diesem Kunststoffvorformling entstandenen Kunststoffbehältnisses (bevorzugt ebenfalls in diesem Bereich).

Besonders bevorzugt wird dieser wenigstens eine Zusammenhang verwendet, um die Umformungseinrichtung zu steuern. Bevorzugt weist daher die Umformungseinrichtung wenigstens eine Steuerungseinrichtung auf, welche den Umformungsvorgang unter Berücksichtigung wenigstens eines Werts, der für einen Zusammenhang zwischen den einander zugeordneten Inspektionsergebnissen charakteristisch ist, steuert.

Bei einer bevorzugten Ausführungsform ist die Auswerteeinrichtung dazu geeignet und bestimmt, um aus einem Zusammenhang und/oder einem Vergleich zwischen den Inspektionsergebnissen und/oder einem ersten Inspektionsergebnis Korrekturwerte zu ermitteln, mittels derer der Umformungsvorgang der Kunststoffvorformlinge anpassbar ist oder welche bei der Umformung der Kunststoffvorformlinge mittels wenigstens einer Umformungsstation verwendbar sind.

Bevorzugt können die Zusammenhänge genutzt werden, um nach der Messung des Kunststoffvorformlings bereits Korrekturwerte für die Herstellung des Kunststoffbehältnisses aus diesem bestimmten Kunststoffvorformling zu ermitteln. Auf diese Weise können Abweichungen zu erwünschten Messergebnissen des hergestellten Kunststoffbehältnisses minimiert werden.

Bei einer weiteren bevorzugten Ausführungsform weist die Vorrichtung eine weitere Zuordnungseinrichtung auf, welche wenigstens ein von der ersten Inspektionseinrichtung ausgegebenes Inspektionsergebnis und/oder wenigstens ein von der zweiten Inspektionseinrichtung ausgegebenes Inspektionsergebnis wenigstens einer Umformungsstation der Umformungseinrichtung oder wenigstens einer Transporteinrichtung und/oder wenigstens einer Halteeinrichtung zum Halten der Kunststoffvorformlinge oder Kunststoffbehältnisse zuordnet.

Bevorzugt werden daher die Messwerte bzw. die Inspektionsergebnisse der ersten Inspektionseinrichtung und/oder die Messwerte bzw. die Inspektionsergebnisse der zweiten Inspektionseinrichtung wenigstens einer Transporteinrichtung zugeordnet und insbesondere den einzelnen Transportporteinrichtungen zugeordnet, auf bzw. mittels denen die Kunststoffvorformlinge und/oder die Behältnisse transportiert werden.

Bei einer weiteren bevorzugten Ausführungsform ist eine Auswerteeinrichtung vorgesehen, welche diese Inspektionsergebnisse bezogen auf die Transporteinrichtung und/oder deren Halteeinrichtungen auswertet.

Auf diese Weise ist es möglich, systematisch außergewöhnlich abweichende Inspektionsergebnisse für solche Kunststoffvorformlinge oder Kunststoffbehältnisse zu erkennen, welche von bestimmten Halteeinrichtungen gehalten wurden (im Vergleich zu anderen Halteeinrichtungen. Falls beispielsweise eine Halteeinrichtung einen Kunststoffvorformling oder ein Kunststoffbehältnis nicht in einer bestimmten Soll-Ausrichtung hält, kann sich dies auf einzelne Prozesse wie den Umformungsprozess oder den Erwärmungsprozess auswirken.

Bevorzugt ist diese weitere Zuordnungseinrichtung auch dazu geeignet, eine Zuordnung zu Halteeinrichtungen durchzuführen, welche stromaufwärts der Inspektionseinrichtung liegen, welche also zu einem früheren Zeitpunkt ein bestimmtes Behältnis gehalten hatten.

Bei einer bevorzugten Ausführungsform weist die erste Inspektionseinrichtung eine erste Strahlungseinrichtung auf, welche die transportierten Kunststoffvorformlinge mit einer Strahlung beaufschlagt, sowie eine erste Detektoreinrichtung, welche von der von der Strahlungseinrichtung ausgegebene und insbesondere durch die Kunststoffvorformlinge hindurchgetretene Strahlung aufnimmt. Weiterhin weist die zweite Inspektionseinrichtung eine zweite Strahlungseinrichtung auf, welche die transportierten Kunststoffbehältnisse mit einer Strahlung beaufschlagt, sowie eine zweite Detektoreinrichtung, welche von der zweiten Strahlungseinrichtung ausgegebene und durch die Kunststoffbehältnisse hindurchgetretene Strahlung aufnimmt, wobei bevorzugt sowohl die transportierten Kunststoffvorformlinge als auch die transportierten Kunststoffbehältnisse zwischen den beiden Strahlungseinrichtungen einerseits und den beiden Detektoreinrichtungen andererseits transportierbar sind.

Bevorzugt sind die jeweiligen Inspektionsbereich zwischen den Strahlungseinrichtungen und den Detektoreinrichtungen angeordnet.

Bei dieser Ausgestaltung wird ein Verfahren vorgeschlagen, bei dem sowohl die Kunststoffvorformlinge als auch die Kunststoffbehältnisse von Strahlung durchleuchtet werden und die transmittierte Strahlung detektiert und/oder bestimmt wird. Bevorzugt ist die Strahlungsdetektoreinrichtung dazu geeignet und bestimmt, ein Spektrum dieser transportierten Strahlung aufzunehmen. Aus diesem Spektrum kann beispielsweise der Wassergehalt der Kunststoffvorformlinge ermittelt werden. Weiterhin ist es auch möglich, dass aus der transportierten Strahlung auf eine Wanddicke der Kunststoffbehältnisse geschlossen wird.

Bevorzugt ist die erste Inspektionseinrichtung dazu geeignet und bestimmt, einen Flüssigkeitsgehalt und insbesondere einen Wassergehalt von Kunststoffvorformlingen zu bestimmen.

Bei einer weiteren vorteilhaften Ausführungsform ist die zweite Inspektionseinrichtung dazu geeignet und bestimmt, eine Wanddicke der gefertigten Kunststoffbehältnisse zu ermitteln bzw. einen Wert zu ermitteln, der für diese Dicke charakteristisch ist.

Bevorzugt ist die zweite Inspektionseinrichtung dazu geeignet und bestimmt, eine Wandungsdicke der Kunststoffbehältnisse in Abhängigkeit von einem Wandungsbereich der Kunststoffbehältnisse zu bestimmen. Zu diesem Zweck kann die zweite Inspektionseinrichtung eine Vielzahl von Detektoreinrichtungen aufweisen, welche entlang einer Längsrichtung der Kunststoffbehältnisse angeordnet sind.

Bei einer weiteren bevorzugten Ausführungsform transportiert die Transporteinrichtung die Kunststoffvorformlinge und auch die Kunststoffbehältnisse vereinzelt. Bevorzugt werden die Kunststoffvorformling über die gesamte Transportstrecke jedenfalls zwischen der ersten Inspektionseinrichtung und der zweiten Inspektionseinrichtung vereinzelt transportiert. Auf diese Weise ist auch die oben erwähnte Zuordnung ermöglicht.

Besonders bevorzugt ist der erste Inspektionsbereich zwischen der ersten Strahlungseinrichtung und der ersten Detektoreinrichtung angeordnet und der zweite Inspektionsbereich ist zwischen der zweiten Strahlungseinrichtung und der zweiten Detektoreinrichtung angeordnet. Wie oben erwähnt, sind bevorzugt die beiden Inspektionsbereiche überlappend oder zusammenfallend angeordnet.

Bevorzugt werden die Kunststoffvorformlinge daher sowohl zwischen der ersten Strahlungseinrichtung und der ersten Detektoreinrichtung transportiert als auch zwischen der zweiten Strahlungseinrichtung und der zweiten Detektoreinrichtung.

Entsprechend werden bevorzugt auch die Kunststoffbehältnisse sowohl zwischen der ersten Strahlungseinrichtung und der ersten Strahlungsdetektoreinrichtung transportiert als auch zwischen der zweiten Strahlungseinrichtung und der zweiten Detektoreinrichtung.

Bevorzugt handelt es sich bei den Kunststoffbehältnissen um PET - Behältnisse und insbesondere Kunststoffflaschen.

Bevorzugt ist wenigstens eine Strahlungseinrichtung der ersten Inspektionseinrichtung auch eine Strahlungseinrichtung der zweiten Inspektionseinrichtung und/oder wenigstens eine Detektoreinrichtung der ersten Inspektionseinrichtung ist auch eine Detektoreinrichtung der zweiten Inspektionseinrichtung.

Besonders bevorzugt weist wenigstens eine Strahlungseinrichtung eine Vielzahl von Strahlungsquellen auf, die in einer Längsrichtung der transportierten Kunststoffvorformlinge oder der transportierten Kunststoffbehältnisse nebeneinander bzw. übereinander angeordnet sind.

Bei einer weiteren vorteilhaften Ausführungsform weist die Vorrichtung eine Zuführeinrichtung auf, welche der Umformungseinrichtung die umzuformenden Kunststoffvorformlinge zuführt, sowie eine Abführeinrichtung, welche die umgeformten Kunststoffbehältnisse von der Umformungseinrichtung abtransportiert. Bevorzugt sind beide Inspektionseinrichtungen zwischen der Zuführeinrichtung und der Abführeinrichtung angeordnet. Bevorzugt sind beide Inspektionseinrichtungen insbesondere geometrisch bzw. räumlich zwischen der Zuführeinrichtung und der Abführeinrichtung angeordnet. Bevorzugt handelt es sich bei demjenigen Bereich, der zwischen der Zuführeinrichtung und Abführeinrichtung angeordnet ist, um einen Bereich, durch den zuvor sowohl die Kunststoffvorformlinge als auch die Kunststoffbehältnisse transportiert werden.

Bei einer weiteren vorteilhaften Ausführungsform ist die Zuführeinrichtung und/oder die Abführeinrichtung ein Transportstern. Besonders bevorzugt ist sowohl die Zuführeinrichtung als auch die Abführeinrichtung ein Transportstern (oder ein Transportrad).

Bei einer weiteren bevorzugten Ausführungsform weisen die Zuführeinrichtung und/oder die Abführeinrichtung einen drehbaren Träger auf, an dem jeweils eine Vielzahl von Halteeinrichtungen und insbesondere Greifeinrichtungen zum Halten und insbesondere Greifen der Kunststoffvorformling bzw. Kunststoffbehältnisse angeordnet ist.

Besonders bevorzugt handelt es sich bei der Zuführeinrichtung um einen Teilungsverzugsstern, der eine Teilung zwischen Kunststoffvorformlingen verändert und insbesondere vergrößert. Derartige Teilungsverzugssterne sind aus dem Stand der Technik an sich bekannt und dienen beispielsweise dazu, nach einem Ofen einen Abstand zwischen den Kunststoffvorformlingen zu vergrößern, sodass diese auch an eine Blasformmaschine übergeben werden können. Bevorzugt ist die Inspektion in einem Bereich angeordnet, in dem bereits die Teilung zwischen den Kunststoffvorformlingen vergrößert wurde und insbesondere in einem Bereich, in dem keine weitere Vergrößerung dieses Abstands mehr stattfindet. Auf diese Weise ist es, wie unten genauer erläutert möglich, dass die Inspektionseinrichtungen abwechselnd Kunststoffvorformlinge und Kunststoffbehältnisse inspizieren.

Besonders bevorzugt weisen sowohl die Zuführeinrichtung als die Abführeinrichtung eine Vielzahl von Halteeinrichtungen und insbesondere von Greifeinrichtung auf, welche die Kunststoffvorformlinge bzw. die Kunststoffbehältnisse greifen und insbesondere in deren Mündungsbereich und insbesondere unterhalb der Mündung greifen. Insbesondere sind diese Greifeinrichtungen dazu geeignet und bestimmt, die Kunststoffvorformlinge an deren Au-ßenoberflächen zu greifen.

Bei einer weiteren vorteilhaften Ausführungsform ist die erste Inspektionseinrichtung dazu geeignet und bestimmt, einen Wassergehalt der Kunststoffvorformlinge zu bestimmen.

Bei einer weiteren vorteilhaften Ausführungsform sind die Zuführeinrichtung und die Abführeinrichtung derart angeordnet, dass ein minimaler Abstand eines von der Zuführeinrichtung transportierten Kunststoffvorformlings und eines von der Abführeinrichtung transportierten Kunststoffbehältnisses geringer ist als 30 cm, bevorzugt geringer als 25 cm, bevorzugt geringer als 20 cm, bevorzugt geringer als 15 cm, bevorzugt geringer als 10 cm und bevorzugt geringer als 5 cm. Andererseits werden jedoch die Kunststoffvorformlinge und Kunststoffbehältnisse derart geführt, dass der Mindestabstand bevorzugt stets größer ist als 3cm, bevorzugt 4cm, bevorzugt 5cm und bevorzugt 10 cm.

Besonders bevorzugt werden in dem Bereich der ersten und zweiten Inspektionseinrichtung, die Kunststoffbehältnisse und die Kunststoffvorformlinge mit der jeweils gleichen Teilung transportiert. Besonders bevorzugt werden die Kunststoffvorformlinge und Kunststoffbehältnisse derart transportiert, dass Inspektionsbereiche nie gleichzeitig von beiden durchlaufen werden.

Bei einer weiteren bevorzugten Ausführungsform sind die Zuführeinrichtung und die Abführeinrichtung derart angeordnet, dass von der Zuführeinrichtung transportierte Kunststoffvorformlinge und von der Abführeinrichtung transportierte Kunststoffbehältnisse die Inspektionsbereiche abwechselnd durchlaufen und bevorzugt ineinander entgegengesetzten Transportrichtungen durchlaufen.

Bevorzugt drehen sich die drehbaren Träger der Zuführeinrichtung und der Abführeinrichtung in einem Arbeitsbetrieb in der gleichen Drehrichtung.

Die vorliegende Erfindung ist weiterhin auf ein Verfahren zum Herstellen von Kunststoffbehältnissen gerichtet, wobei eine Transporteinrichtung Kunststoffvorformlinge entlang eines vorgegebenen Transportpfads transportiert und eine Umformungseinrichtung die Kunststoffvorformlinge zu Kunststoffbehältnissen expandiert und eine erste Inspektionseinrichtung, die Kunststoffvorformlinge inspiziert und eine zweite Inspektionseinrichtung die Kunststoffbehältnisse inspiziert.

Erfindungsgemäß weist die erste Inspektionseinrichtung einen ersten Inspektionsbereich auf, der von den zu inspizierenden Kunststoffvorformlingen zu deren Inspektion durchlaufen wird und die zweite Inspektionseinrichtung weist einen zweiten Inspektionsbereich auf, der von den zu inspizierenden Kunststoffbehältnissen zu deren Inspektion durchlaufen wird (bzw. durch den Kunststoffbehältnisse hindurch transportiert werden, wobei dieser erste Inspektionsbereich und dieser zweite Inspektionsbereich wenigstens teilweise überlappen.

Bei einem bevorzugten Verfahren werden von den beiden Inspektionseinrichtungen zeitlich abwechselnd jeweils Kunststoffvorformlinge und Kunststoffbehältnisse inspiziert. Bevorzugt werden zum Zwecke der Inspektion die Kunststoffvorformlinge und/oder die Kunststoffbehältnisse von Strahlung und insbesondere von Infrarotstrahlung durchstrahlt. Besonders bevorzugt werden die Kunststoffvorformlinge und die Kunststoffbehältnisse in unterschiedlichen und insbesondere entgegengesetzten Transportrichtungen durch die Inspektionseinrichtungen und/oder die Inspektionsbereiche transportiert.

Bevorzugt werden die Kunststoffvorformlinge und die Kunststoffbehältnisse derart transportiert, dass immer nur ein Kunststoffvorformling oder ein Kunststoffbehältnis durchleuchtet und/oder inspiziert wird. Bevorzugt werden die Kunststoffvorformlinge und/oder die Kunststoffbehältnisse mit Infrarotlicht bestrahlt.

Bevorzugt sind die Transportgeschwindigkeiten der Kunststoffvorformlinge und der Kunststoffbehältnisse im Bereich der Inspektion identisch.

Bei einem weiteren bevorzugten Verfahren wird Inspektion eines Kunststoffvorformlings auch eine Inspektion eines daraus entstehenden Kunststoffbehältnisses zugeordnet.

Bevorzugt werden die Kunststoffvorformlinge und/oder die Kunststoffbehältnisse wie oben erwähnt vereinzelt transportiert.

Weitere Vorteile und Ausführungsformen ergeben sich aus den beigefügten Zeichnungen:
Darin zeigen:
- Fig. 1: eine schematische Darstellung einer erfindungsgemäßen Vorrichtung;
- Fig. 2: eine Detailansicht der in Fig. 1 gezeigten Vorrichtung;
- Fig. 3: eine schematische Darstellung der Inspektionseinrichtungen;
- Fig. 4: eine Draufsicht auf die erfindungsgemäße Vorrichtung;
- Fig. 5: eine weitere Schnittdarstellung der erfindungsgemäßen Vorrichtung.

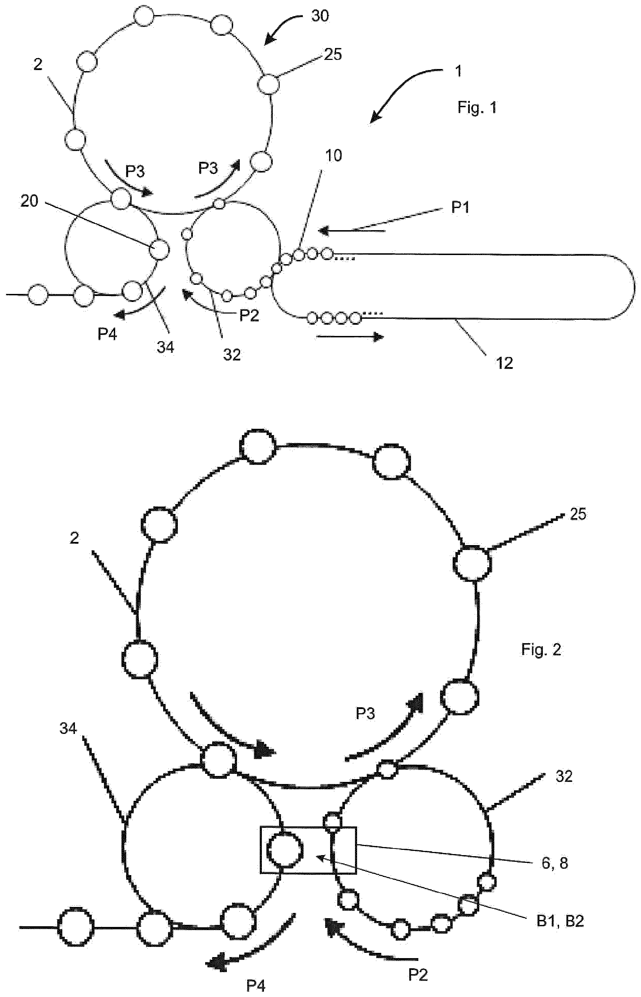

Figur 1 zeigt eine schematische Darstellung einer erfindungsgemäßen Vorrichtung 1. Dabei ist eine Erwärmungseinrichtung 12 vorgesehen, durch welche Kunststoffvorformlinge 10 entlang des Transportpfads P1 gefördert werden. Dabei werden die Kunststoffvorformlinge erwärmt. Bei der Erwärmungseinrichtung kann es sich beispielsweise um einen Infrarotofen oder einen Mikrowellenofen handeln.

Anschließend werden die Kunststoffvorformlinge an eine Zuführeinrichtung 32 übergeben (Pfeil P2). In dieser Zuführeinrichtung wird eine Teilung bzw. ein Abstand zwischen der einzelnen aufeinanderfolgenden Kunststoffvorformlinge vergrößert. Mit diesem vergrößerten Abstand werden die Kunststoffvorformlinge an die Umformungseinrichtung 30 übergeben. Diese weist eine Transporteinrichtung 2 in Form eines drehbaren Trägers auf, an dem eine Vielzahl von Umformungsstationen 25 angeordnet ist, innerhalb derer die Kunststoffvorformlinge durch Beaufschlagung mit einem fließfähigen (und insbesondere gasförmigen, ggfs. aber auch flüssigen) Medium zu den Kunststoffbehältnissen 20 umgeformt werden. Dabei werden die Kunststoffbehältnisse entlang der Pfeile P3 transportiert

Anschließend werden die gefertigten Kunststoffbehältnisse 20 (Pfeil P4) über eine Abführeinrichtung 34 weder weiter transportiert.

Figur 2 zeigt eine vergrößerte Darstellung der in Figur 1 gezeigten Vorrichtung. Man erkennt, dass in dem Bereich zwischen der Zuführeinrichtung 32 und der Abführeinrichtung 34 die Kunststoffvorformlinge 10 einerseits und die gefertigten Kunststoffbehältnisse 20 andererseits einander sehr nahekommen. Auf diese Weise hat die Anmelderin ermittelt, dass dieser Bereich gut geeignet ist zur Anbringung einer Inspektionseinrichtung. Die Bezugszeichen B1 und B2 kennzeichnen entsprechend den Inspektionsbereich, durch den sowohl die Kunststoffvorformlinge 10 als auch die Kunststoffbehältnisse 20 transportiert werden. Entsprechend kennzeichnen die Bezugszeichen 6 und 8 die beiden Inspektionseinrichtungen genauer die erste Inspektionseinrichtung 6, sowie zweite Inspektionseinrichtung 8.

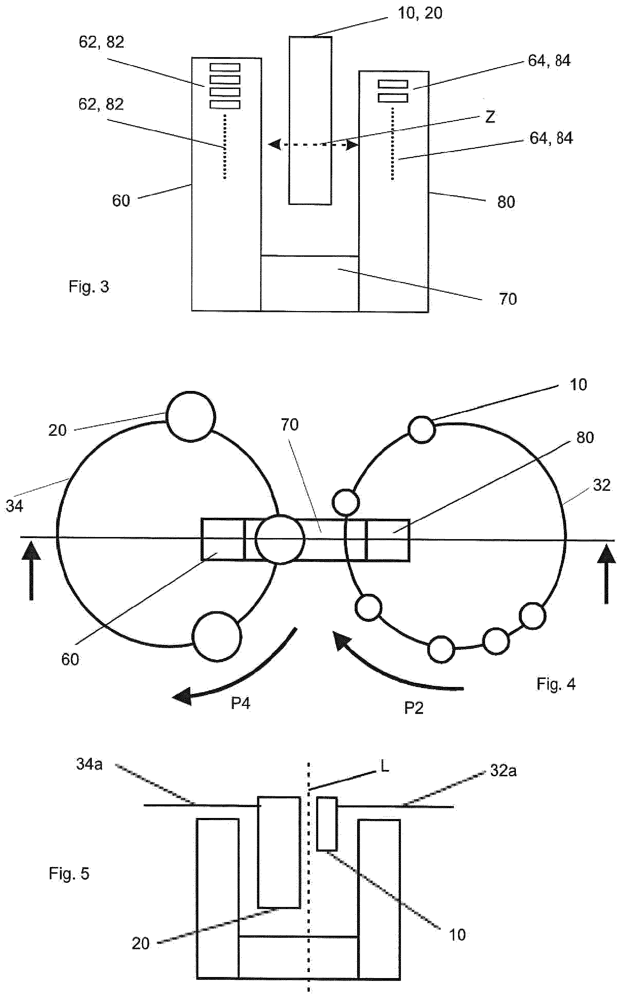

Figur 3 zeigt eine schematische Darstellung der Inspektionseinrichtungen 6, 8. Dabei sind Strahlungseinrichtungen 62, 82 vorgesehen, welche Strahlung, und insbesondere infrarotes Licht auf die transportierten Objekte, d. h. sowohl die Kunststoffvorformlinge 10 als auch die Kunststoffvorformlinge 20 aufbringen. Die Bezugszeichen 64, 84 kennzeichnen jeweils Detektoreinrichtungen, welche hier an einem weiteren Detektorträger 80 angeordnet sind. Das Bezugszeichen 60 kennzeichnet einen Träger, an dem die einzelnen Strahlungseinrichtungen der ersten und zweiten Inspektionseinrichtungen vorgesehen sind. Die Detektoreinrichtungen 64, 84 sind bevorzugt dazu geeignet und bestimmt, infrarotes Licht zu detektieren.

Das Bezugszeichen 70 kennzeichnet einen Zwischenträger, an dem die beiden Träger 60 und 80 angeordnet sind. Der Zwischenraum Z zwischen den Strahlungseinrichtungen 62, 82 einerseits und den Detektoreinrichtungen 64, 84 andererseits ist gleichzeitig auch der Inspektionsbereich bzw. stellt die beiden Inspektionsbereiche B1 und B2 dar.

Figur 4 zeigt eine Draufsicht der erfindungsgemäßen Vorrichtung in dem Bereich zwischen der Zuführeinrichtung 32 und der Abführeinrichtung 34. Man erkennt auch hier wieder den Verbindungträger 70 sowie auch die Träger 60 und 80 der beiden Inspektionseinrichtungen. Man erkennt, dass sowohl die Kunststoffvorformlinge 10 als auch die Kunststoffvorformlinge 20 durch diesen Bereich hindurch transportiert werden und auf diese Weise inspiziert werden können.

Figur 5 zeigt eine weitere Darstellung der erfindungsgemäßen Vorrichtung. Hier sind Greifeinrichtungen 32a der Zuführeinrichtung sowie Greifeinrichtungen 34a der Abführeinrichtung 34 vorgesehen. Die Greifeinrichtungen 32a dienen zum Greifen der Kunststoffvorformlinge 10 und die Greifeinrichtungen 34a dienen zum Greifen der gefertigten Kunststoffbehältnisse 20.

Wie oben erwähnt, sind bevorzugt die Zuführeinrichtung und die Abführeinrichtung derart angeordnet, dass zu keinem Zeitpunkt gleichzeitig sowohl ein Kunststoffvorformling 10 als auch ein Kunststoffbehältnis 20 in dem Inspektionsbereich angeordnet sind. Auf diese Weise ist es möglich, dass die Kunststoffvorformlinge 10 und die Kunststoffbehältnisse 20 jeweils abwechselnd inspiziert werden. Dabei ist jedoch möglich, dass zumindest einzelne Strahlungseinrichtungen 62, 82 sowie auch einzelne Detektoreinrichtungen 64, 84 sowohl zur Inspektion der Kunststoffvorformlinge 10 als auch zur Inspektion der Kunststoffbehältnisse 20 dienen.

Man erkennt jedoch in Figur 5, dass die Kunststoffvorformlinge 10 in der Längsrichtung L kürzer sind als die Kunststoffbehältnisse 20. Dies bedeutet, dass vorteilhaft ein Teil der Strahlungseinrichtungen sowie auch ein Teil der Detektoreinrichtungen lediglich zur Inspektion der Kunststoffbehältnisse 20, nicht jedoch zur Inspektion der Kunststoffvorformlinge 10 dient.

## Patentansprüche

1. Vorrichtung (1) zum Herstellen von Kunststoffbehältnissen mit einer Transporteinrichtung (2), welche Kunststoffvorformlinge (10) entlang eines vorgegebenen Transportpfads (P1, P2, P3) transportiert, mit einer Umformungseinrichtung (30), welche die Kunststoffvorformlinge zu Kunststoffbehältnissen (20) expandiert mit einer ersten Inspektionseinrichtung (6), welche dazu geeignet und bestimmt ist, die Kunststoffvorformlinge (10) zu inspizieren und mit einer zweiten Inspektionseinrichtung (8), welche dazu geeignet und bestimmt ist, die Kunststoffbehältnisse (20) zu inspizieren,
**dadurch gekennzeichnet, dass**
die erste Inspektionseinrichtung einen ersten Inspektionsbereich (B1) aufweist der von den zu inspizierenden Kunststoffvorformingen (10) zu deren Inspektion durchlaufen wird und die zweite Inspektionseinrichtung (8) einen zweiten Inspektionsbereich (B2) aufweist, der von den zu inspizierenden Kunststoffbehältnissen (20) zu deren Inspektion durchlaufen wird, wobei dieser erste Inspektionsbereich und dieser zweite Inspektionsbereich (B2) wenigstens teilweise überlappen.

2. Vorrichtung (1) nach Anspruch 1,
**dadurch gekennzeichnet, dass**
die erste Inspektionseinrichtung (6) eine erste Strahlungseinrichtung (62) aufweist, welche die transportierten Kunststoffvorformlinge (10) mit einer Strahlung beaufschlagt sowie eine erste Detektoreinrichtung (64), welche von der von der Strahlungseinrichtung (62) ausgegebene Strahlung aufnimmt und die zweite Inspektionseinrichtung (8) eine zweite Strahlungseinrichtung (82) aufweist, welche die transportierten Kunststoffbehältnisse (20) mit einer Strahlung beaufschlagt sowie eine zweite Detektoreinrichtung (84), welche von der zweiten Strahlungseinrichtung (82) ausgegebene Strahlung aufnimmt, wobei sowohl die transportierten Kunststoffvorformlinge also auch die transportierten Kunststoffbehältnisse (20) zwischen den beiden Strahlungseinrichtungen (62, 82) und beiden Detektoreinrichtungen transportierbar sind.

3. Vorrichtung (1) nach Anspruch 2,
**dadurch gekennzeichnet, dass**
der erste Inspektionsbereich (B1) zwischen der ersten Strahlungseinrichtung (62) und der ersten Detektoreinrichtung (64) angeordnet ist und der zweite Inspektionsbereich (B2) zwischen der zweiten Strahlungseinrichtung (82) und der zweiten Detektoreinrichtung (84) angeordnet ist.

4. Vorrichtung (1) nach wenigstens einem der vorangegangenen Ansprüche,
**dadurch gekennzeichnet, dass**
wenigstens eine Strahlungseinrichtung (62) der ersten Inspektionseinrichtung (6) auch eine Strahlungseinrichtung (82) der zweiten Inspektionseinrichtung (8) und/oder dass wenigstens eine Detektoreinrichtung (64) der ersten Inspektionseinrichtung (6) auch eine Detektoreinrichtung (84) der zweiten Inspektionseinrichtung (8) ist.

5. Vorrichtung (1) nach wenigstens einem der vorangegangenen Ansprüche,
**dadurch gekennzeichnet, dass**
die Vorrichtung (1) eine Zuführeinrichtung (32) aufweist, welche der Umformungseinrichtung die umzuformenden Kunststoffvorformlinge (10) zuführt, sowie eine Abführeinrichtung (34) welche die umgeformten Kunststoffbehältnisse (20) von der Umformungseinrichtung abtransportiert, und beide Inspektionseinrichtungen (6, 8) zwischen der Zuführeinrichtung (32) und der Abführeinrichtung (34) angeordnet sind.

6. Vorrichtung (1) nach dem vorangegangenen Anspruch,
**dadurch gekennzeichnet, dass**
die Zuführeinrichtung (32) und/oder die Abführeinrichtung (34) ein Transportstern ist und/oder die Zuführeinrichtung (32) und/oder die Abführeinrichtung (34) einen drehbaren Träger aufweisen, an denen jeweils eine Vielzahl von Halteeinrichtungen zum Halten der Kunststoffvorformlinge und/oder Kunststoffbehältnisse angeordnet ist.

7. Vorrichtung (1) nach wenigstens einem der vorangegangenen Ansprüche,
**dadurch gekennzeichnet, dass**
die Zuführeinrichtung ein Teilungsverzugsstern ist, der eine Teilung zwischen Kunststoffvorformlingen verändert und insbesondere vergrößert.

8. Vorrichtung (1) nach wenigstens einem der vorangegangenen Ansprüche,
**dadurch gekennzeichnet, dass**
die erste Inspektionseinrichtung (6) dazu geeignet und bestimmt ist, einen Wassergehalt der Kunststoffvorformlinge zu bestimmen und die zweite Inspektionseinrichtung (8) dazu geeignet und bestimmt ist, eine Wandungsdicke der Kunststoffbehältnisse (20) zu bestimmen.

9. Vorrichtung (1) nach wenigstens einem der vorangegangenen Ansprüche, 5 - 7,
**dadurch gekennzeichnet, dass**
die erste Zuführeinrichtung (32) und die Abführeinrichtung (34) derart angeordnet sind, dass ein minimaler Abstand eines von der Zuführeinrichtung (32) transportierten Kunststoffvorformlings und eines von der Abführeinrichtung (34) geringer ist als 30cm, bevorzugt geringer als 25cm, bevorzugt geringer als 20cm, bevorzugt geringer als 15cm, bevorzugt geringer als 10cm und besonders bevorzugt geringer als 5cm.

10. Vorrichtung (1) nach wenigstens einem der vorangegangenen Ansprüche, 5 - 7,
**dadurch gekennzeichnet, dass**
die Zuführeinrichtung (32) und die Abführeinrichtung (34) derart angeordnet sind, dass von der Zuführeinrichtung (32) transportierte Kunststoffvorformlinge (10) und von der Abführeinrichtung (34) transportierte Kunststoffbehältnisse die Inspektionsbereiche abwechselnd durchlaufen und bevorzugt ineinander entgegengesetzten Transportrichtungen durchlaufen.

11. Vorrichtung (1) nach wenigstens einem der vorangegangenen Ansprüche,
**dadurch gekennzeichnet, dass**
die Vorrichtung eine Zuordnungseinrichtung aufweist, welche einem Inspektionsergebnis eines bestimmten Kunststoffvorformling ein Inspektionsergebnis des Kunststoffbehältnisses, welches aus diesem Kunststoffvorformling geformt wurde, zuordnet.

12. Vorrichtung (1) nach wenigstens einem der vorangegangenen Ansprüche,
**dadurch gekennzeichnet, dass**
die Vorrichtung eine weitere Zuordnungseinrichtung aufweist, welche wenigstens ein von der ersten Inspektionseinrichtung ausgegebenes Inspektionsergebnis und/oder wenigstens ein von der zweiten Inspektionseinrichtung ausgegebenes Inspektionsergebnis wenigstens einer Umformungsstation der Umformungseinrichtung oder wenigstens einer Transporteinrichtung und/oder wenigstens einer Halteeinrichtung zum Halten der Kunststoffvorformlinge oder Kunststoffbehältnisse zuordnet.

13. Vorrichtung (1) nach wenigstens einem der vorangegangenen Ansprüche,
**dadurch gekennzeichnet, dass**
die Vorrichtung (1) eine Auswerteeinrichtung aufweist, welche wenigstens ein Inspektionsergebnis der ersten Inspektionseinrichtung und/oder wenigstens ein Inspektionsergebnis der zweiten Inspektionseinrichtung auswertet und welche insbesondere wenigstens ein Inspektionsergebnis der ersten Inspektionseinrichtung mit wenigstens einem Inspektionsergebnis der zweiten Inspektionseinrichtung vergleicht.

14. Verfahren zum Herstellen von Kunststoffbehältnissen wobei eine Transporteinrichtung (2) Kunststoffvorformlinge (10) entlang eines vorgegebenen Transportpfads (P) transportiert, und eine Umformungseinrichtung (4) die Kunststoffvorformlinge zu Kunststoffbehältnissen (20) expandiert und eine erste Inspektionseinrichtung (6), die Kunststoffvorformlinge (10) inspizieren und eine zweite Inspektionseinrichtung (8), die Kunststoffbehältnisse (20) inspiziert,
**dadurch gekennzeichnet, dass**
die erste Inspektionseinrichtung einen ersten Inspektionsbereich (B1) aufweist der von den zu inspizierenden Kunststoffvorformingen (10) zu deren Inspektion durchlaufen wird und die zweite Inspektionseinrichtung (8) einen zweiten Inspektionsbereich (B2) aufweist, der von den zu inspizierenden Kunststoffbehältnissen (20) zu deren Inspektion durchlaufen wird, wobei dieser erste Inspektionsbereich (B1) und dieser zweite Inspektionsbereich (B2) wenigstens teilweise überlappen.

## Claims

1. Apparatus (1) for producing plastic containers with a transport device (2) which transports plastic preforms (10) along a predefined transport path (P1, P2, P3), with a forming device (30) which expands the plastic preforms into plastic containers (20) with a first inspection device (6) which is suitable and intended to inspect the plastic preforms (10) and with a second inspection device (8) which is suitable and intended to inspect the plastic containers (20),
**characterized in that**
the first inspection device has a first inspection region (B1) through which the plastic preforms (10) to be inspected pass so that they can be inspected, and the second inspection device (8) has a second inspection region (B2) through which the plastic containers (20) to be inspected pass so that they can be inspected, wherein said first inspection region and said second inspection region (B2) overlapping at least in part.

2. The apparatus (1) according to claim 1,
**characterized in that**
the first inspection device (6) has a first radiation device (62) which applies radiation to the transported plastic preforms (10) and a first detector device (64) which absorbs radiation emitted by the radiation device (62), and the second inspection device (8) has a second radiation device (82) which applies radiation to the transported plastic containers (20) and a second detector device (84) which absorbs radiation emitted by the second radiation device (82), wherein both the transported plastic preforms and the transported plastic containers (20) being transportable between the two radiation devices (62, 82) and the two detector devices.

3. The apparatus (1) according to claim 2,
**characterized in that**
the first inspection region (B1) is arranged between the first radiation device (62) and the first detector device (64) and the second inspection region (B2) is arranged between the second radiation device (82) and the second detector device (84).

4. The apparatus (1) according to at least one of the preceding claims,
**characterized in that**
at least one radiation device (62) of the first inspection device (6) is also a radiation device (82) of the second inspection device (8) and/or at least one detector device (64) of the first inspection device (6) is also a detector device (84) of the second inspection device (8).

5. The apparatus (1) according to at least one of the preceding claims,
**characterized in that**
the apparatus (1) has a supply device (32) which supplies the plastic preforms (10) to be formed to the forming device, and a discharge device (34) which transports the formed plastic containers (20) away from the forming device, and both inspection devices (6, 8) are arranged between the supply device (32) and the discharge device (34).

6. The apparatus (1) according to the preceding claim,
**characterized in that**
the supply device (32) and/or the discharge device (34) is a transport starwheel and/or the supply device (32) and/or the discharge device (34) has a rotatable carrier, on each of which a plurality of holding devices for holding the plastic preforms and/or plastic containers is arranged.

7. The apparatus (1) according to at least one of the preceding claims,
**characterized in that**
the supply device is a pitch varying starwheel which changes a pitch between plastic preforms.

8. The apparatus (1) according to at least one of the preceding claims,
**characterized in that**
the first inspection device (6) is suitable and intended to determine a water content of the plastic preforms and the second inspection device (8) is suitable and intended to determine a wall thickness of the plastic containers (20).

9. The apparatus (1) according to at least one of the preceding claims 5-7,
**characterized in that**
the first supply device (32) and the discharge device (34) are arranged such that a minimum distance of a plastic preform transported by the supply device (32) and a plastic preform transported by the discharge device (34) is less than 30 cm, preferably less than 25 cm, preferably less than 20 cm, preferably less than 15 cm, preferably less than 10 cm and particularly preferably less than 5 cm.

10. The apparatus (1) according to at least one of the preceding claims 5-7,
**characterized in that**
the supply device (32) and the discharge device (34) are arranged such that the plastic preforms (10) transported by the supply device (32) and the plastic containers transported by the discharge device (34) pass through the inspection regions alternately and preferably pass through by transport directions in opposite directions.

11. The apparatus (1) according to at least one of the preceding claims,
**characterized in that**
the apparatus has an assignment device which assigns an inspection result of a specific plastic preform to an inspection result of the plastic container which was formed from this plastic preform.

12. The apparatus (1) according to at least one of the preceding claims,
**characterized in that**
the apparatus has a further assignment device which assigns at least one inspection result output by the first inspection device and/or at least one inspection result output by the second inspection device to at least one forming station of the forming device or at least one transport device and/or at least one holding device for holding the plastic preforms or plastic containers.

13. The apparatus (1) according to at least one of the preceding claims,
**characterized in that**
the apparatus (1) has an evaluation device which evaluates at least one inspection result of the first inspection device and/or at least one inspection result of the second inspection device and which preferably compares at least one inspection result of the first inspection device with at least one inspection result of the second inspection device.

14. Method for producing containers, wherein a transport device (2) transporting plastic preforms (10) along a predefined transport path (P) and a forming device (4) expanding the plastic preforms into plastic containers (20) and a first inspection device (6) inspecting the plastic preforms (10) and a second inspection device (8) inspecting the plastic containers (20),
**characterized in in that**
the first inspection device has a first inspection region (B1) through which the plastic preforms (10) to be inspected pass so that they can be inspected, and the second inspection device (8) has a second inspection region (B2) through which the plastic containers (20) to be inspected pass so that they can be inspected, wherein said first inspection region (B1) and said second inspection region (B2) overlapping at least in part.

## Revendications

1. Dispositif (1) de fabrication de récipients en matière plastique avec un système de transport (2), qui transporte des préformes en matière plastique (10) le long d'un trajet de transport (P1, P2, P3) prédéfini, avec un système de façonnage (30) qui dilate les préformes en matière plastique en récipients en matière plastique (20), avec un premier système d'inspection (6) qui est adapté pour et se destine à inspecter les préformes en matière plastique (10), et avec un deuxième système d'inspection (8), qui est adapté pour et se destine à inspecter les récipients en matière plastique (20),
**caractérisé en ce que**
le premier système d'inspection présente une première zone d'inspection (B1), qui est traversée par les préformes en matière plastique (10) à inspecter pour leur inspection et le deuxième système d'inspection (8) présente une deuxième zone d'inspection (B2) qui est traversée par les récipients en matière plastique (20) à inspecter pour leur inspection, dans lequel ladite première zone d'inspection et ladite deuxième zone d'inspection (B2) se chevauchent au moins en partie.

2. Dispositif (1) selon la revendication 1,
**caractérisé en ce que**
le premier système d'inspection (6) présente un premier système de rayonnement (62), qui soumet les préformes en matière plastique (10) transportées à l'action d'un rayonnement, ainsi qu'un premier système de détection (64), qui absorbe le rayonnement émis par le système de rayonnement (62), et le deuxième système d'inspection (8) présente un deuxième système de rayonnement (82), qui soumet les récipients en matière plastique (20) transportés à l'action d'un rayonnement, ainsi qu'un deuxième système de détection (84), qui absorbe le rayonnement émis par le deuxième système de rayonnement (82), dans lequel à la fois les préformes en matière plastique transportées et les récipients en matière plastique (20) transportés peuvent être transportés entre les deux systèmes de rayonnement (62, 82) et les deux systèmes de détection.

3. Dispositif (1) selon la revendication 2,
**caractérisé en ce que**
la première zone d'inspection (B1) est disposée entre le premier système de rayonnement (62) et le premier système dispositif de détection (64) et la deuxième zone d'inspection (B2) est disposée entre le deuxième système de rayonnement (82) et le deuxième système de détection (84).

4. Dispositif (1) selon au moins l'une quelconque des revendications précédentes,
**caractérisé en ce que**
au moins un système de rayonnement (62) du premier système d'inspection (6) est également un système de rayonnement (82) du deuxième système d'inspection (8) et/ou qu'au moins un système de détection (64) du premier système d'inspection (6) est également un système de détection (84) du deuxième système d'inspection (8).

5. Dispositif (1) selon au moins l'une quelconque des revendications précédentes,
**caractérisé en ce que**
le dispositif (1) présente un système d'amenée (32) qui amène les préformes en matière plastique (10) à façonner au système de façonnage, ainsi qu'un système d'évacuation (34), qui évacue les récipients en matière plastique (20) façonnés du système de façonnage, et les deux systèmes d'inspection (6, 8) sont disposés entre le système d'amenée (32) et le système d'évacuation (34).

6. Dispositif (1) selon la revendication précédente, dans lequel
**caractérisé en ce que**
le système d'amenée (32) et/ou le système d'évacuation (34) sont une étoile de transport et/ou le système d'amenée (32) et/ou le système d'évacuation (34) présentent un support rotatif sur lequel est disposée respectivement une pluralité de systèmes de maintien destinés à maintenir les préformes en matière plastique et/ou les récipients en matière plastique.

7. Dispositif (1) selon au moins l'une quelconque des revendications précédentes,
**caractérisé en ce que**
le système d'amenée est une étoile de décalage, qui modifie et en particulier agrandit un écartement entre des préformes en matière plastique.

8. Dispositif (1) selon au moins l'une quelconque des revendications précédentes,
**caractérisé en ce que**
le premier système d'inspection (6) est adapté pour et se destine à définir une teneur en eau des préformes en matière plastique et le deuxième système d'inspection (8) est adapté pour et se destine à définir une épaisseur de paroi des récipients en matière plastique (20).

9. Dispositif (1) selon au moins l'une quelconque des revendications précédentes 5 à 7,
**caractérisé en ce que**
le premier système d'amenée (32) et le système d'évacuation (34) sont disposés de telle manière qu'une distance minimale entre une préforme en matière plastique transportée par le système d'amenée (32) et une préforme en matière plastique transportée par le système d'évacuation (34) est inférieure à 30 cm, de manière préférée est inférieure à 25 cm, de manière préférée est inférieure à 20 cm, de manière préférée est inférieure à 15 cm, de manière préférée est inférieure à 10 cm et de manière particulièrement préférée est inférieure à 5 cm.

10. Dispositif (1) selon au moins l'une quelconque des revendications précédentes 5 à 7,
**caractérisé en ce que**
le système d'amenée (32) et le système d'évacuation (34) sont disposés de telle manière que des préformes en matière plastique (10) transportées par le système d'amenée (32) et des récipients en matière plastique transportés par le système d'évacuation (34) traversent alternativement les zones d'inspection et traversent de manière préférée dans des directions de transport opposées l'une à l'autre.

11. Dispositif (1) selon au moins l'une quelconque des revendications précédentes,
**caractérisé en ce que**
le dispositif présente un système d'affectation qui affecte à un résultat d'inspection d'une préforme en matière plastique donnée un résultat d'inspection du récipient en matière plastique qui a été façonné à partir de ladite préforme en matière plastique.

12. Dispositif (1) selon au moins l'une quelconque des revendications précédentes,
**caractérisé en ce que**
le dispositif présente un autre système d'affectation qui affecte au moins un résultat d'inspection émis par le premier système d'inspection et/ou au moins un résultat d'inspection émis par le deuxième système d'inspection à au moins une station de façonnage du système de façonnage ou à au moins un système de transport et/ou à au moins un système de maintien pour maintenir les préformes en matière plastique ou les récipients en matière plastique.

13. Dispositif (1) selon au moins l'une quelconque des revendications précédentes,
**caractérisé en ce que**
le dispositif (1) présente un système d'évaluation qui évalue au moins un résultat d'inspection du premier système d'inspection et/ou au moins un résultat d'inspection du deuxième système d'inspection et qui compare en particulier au moins un résultat d'inspection du premier système d'inspection avec au moins un résultat d'inspection du deuxième système d'inspection.

14. Procédé de fabrication de récipients en matière plastique, dans lequel un système de transport (2) transporte des préformes en matière plastique (10) le long d'un trajet de transport (P) prédéfini, et un système de façonnage (4) dilate les préformes en matière plastique en des récipients en matière plastique (20) et un premier système d'inspection (6) inspecte les préformes en matière plastique (10) et un deuxième système d'inspection (8) inspecte les récipients en matière plastique (20),
**caractérisé en ce que**
le premier système d'inspection présente une première zone d'inspection (B1) qui est traversée par les préformes en matière plastique (10) à inspecter pour leur inspection et le deuxième système d'inspection (8) présente une deuxième zone d'inspection (B2) qui est traversée par les récipients en matière plastique (20) à inspecter pour leur inspection, dans lequel ladite première zone d'inspection (B1) et ladite deuxième zone d'inspection (B2) se chevauchent au moins en partie.
